# EUROPEAN PATENT SPECIFICATION

(11) **EP 1 497 974 B1**
(45) Date of publication and mention of the grant of the patent: **04.10.2017**
(21) Application number: 03719808.2
(22) Date of filing: 17.04.2003
(51) Int. Cl.: H04N 5/44, H04N 5/445

(54) **DIRECT CHANNEL ENTRY FOR TUNER OF A TELEVISION SIGNAL RECEIVER AND SATELLITE OR CABLE RECEIVER BOTH ENABLED FROM A MENU OFFERING VISUAL FEEDBACK**
DIREKTE KANALEINGABE FÜR TUNER EINES FERNSEHEMPFÄNGERS UND SATELLITEN- ODER KABELEMPFÄNGER DURCH MENÜSTEUERUNG BEIDER MIT VISUELLER RÜCKKOPPLUNG
ENTREE DE CANAL DIRECTE POUR SYNTONISEUR DE TELEVISION ET RECEPTEUR POUR SATELLITE OU CABLE, MIS EN SERVICE A PARTIR D'UN MENU OFFRANT UNE RETROACTION VISUELLE

(30) Priority: 23.04.2002 US 374954 P
(43) Date of publication of application: 19.01.2005
(73) Proprietor: Thomson Licensing, 92130 Issy-les-Moulineaux (FR)
(72) Inventor: LIEBHOLD, Valerie, Sacrez, Carmel, IN 46032 (US); STUART, Anthony, Edward, Zionsville, IN 46077 (US)
(74) Representative: Huchet, Anne
(86) International application number: PCT/US2003/011881
(87) International publication number: WO 2003/092270

(56) References cited:
- EP-A- 0 477 754
- US-A- 4 405 946
- US-A- 5 237 420
- US-B1- 6 359 580
- PATENT ABSTRACTS OF JAPAN vol. 015, no. 198 (P-1204), 22 May 1991 (1991-05-22) & JP 03 049088 A (SANYO ELECTRIC CO LTD), 1 March 1991 (1991-03-01)

## Description

This U.S. non-provisional patent application claims the benefit of and/or priority to U.S. provisional patent application serial number 60/374,954 filed April 23, 2002 entitled "Direct Channel Entry For Tuner and Satellite or Cable Receiver Both Enabled From a Menu Offering Visual Feedback" both of which are commonly assigned.

### Background

### Field of the Invention

The present invention concerns television signal processing and, more particularly, concerns on-screen visual feedback for television channel tuning.

### Background Information

In some instances and/or places television channels received from various sources such an antenna (i.e. over the air transmission), a cable television system, satellite system or otherwise, may be assigned (have) the same channel numbers. Thus, for example, a television channel from an antenna and a television channel from a satellite receiver may both have channels answering to the number "11".

As a specific example, a television signal receiving device or receiver (e.g. a personal video recorder or PVR) typically has an internal tuner for connection to a television signal input such as an antenna in addition to other components. The internal tuner allows a user to tune the PVR to a particular television channel (i.e. a "tuner channel"). The PVR also includes a television signal input that allows the pass-through of a television channel from a cable box, satellite receiver, or the like (i.e. and "auxiliary device:). The auxiliary device allows a user to tune to a particular television channel with respect to the television signal being received by the auxiliary device (i.e. a "satellite channel" in the case of a satellite box, a "cable channel" in the case of a cable box, or the like). If the user has the internal PVR tuner tuned to channel "11" (i.e. the tuning channel) and then enters channel "11" again, the PVR tunes to channel "11" on its internal tuner. If the user is already on an auxiliary device channel, and enters "11", the device sends to the auxiliary device the command of tuning to its channel "11".

It is thus difficult for the user to remember whether he/she is already on an auxiliary device channel (i.e. satellite channel or cable channel) or on a tuner channel. Additionally, in order to go from tuner channels to auxiliary channels, the user has to press a button on the remote toggling video inputs in order to go from the tuner channel source (e.g, VCR) to the auxiliary channel device. The user can also press the channel change button several times until reaching the desired channel.

Clearly from the above, the prior art methods are either confusing and/or time consuming. Additionally, the above situations can be problematic, not only for the user, but for the television signal receiver or receiving system.

It is evident from the above that there is a need for easily identifying the television signal source when performing a direct channel entry.

US 4,405,946 discloses a signal converting apparatus such as one including demodulation and remodulation apparatus for converting RF cable carriers to RF carriers having frequencies corresponding to broadcast frequencies, a character generator is coupled to the tuning selector to generate characters representative of the channel number of the selected cable carrier.

US 6,359,580 concerns a system and method that allows a television viewer to select a channel without having to pre-select the source of the television signal received. If a conflict occurs in that multiple sources such as a satellite system, high definition television (HDTV), or cable TV all utilize the desired channel, then the system informs the viewer on the television display of the conflict and prompts the viewer for the desired source for the selected channel.

### Summary of the Invention

A method and a receiver according to the invention are set out in claims 1 and 3.

### Brief Description of the Drawings

In the drawings:
Fig. 1 is a block diagram representation of an exemplary television system incorporating a television signal receiver in accordance with the principles of the subject invention;
Fig. 2 is a block diagram of an exemplary television signal receiver in accordance with the principles of the subject invention;
Fig. 3A is a depiction of a display device having an on-screen display of visual feedback in the form of an exemplary information banner in accordance with an aspect of the subject invention particularly illustrating television channel input with respect to a tuner channel or a satellite channel;
Fig. 3B is a depiction of a display device having an on-screen display of visual feedback in the form of an exemplary information banner in accordance with an aspect of the subject invention particularly illustrating television channel input with respect to a tuner channel or a cable channel; and
Fig. 4 is a flowchart of an exemplary manner of operation of one aspect of the subject invention.

Corresponding reference characters indicate corresponding parts throughout the several views.

### Description of the Preferred Embodiment(s)

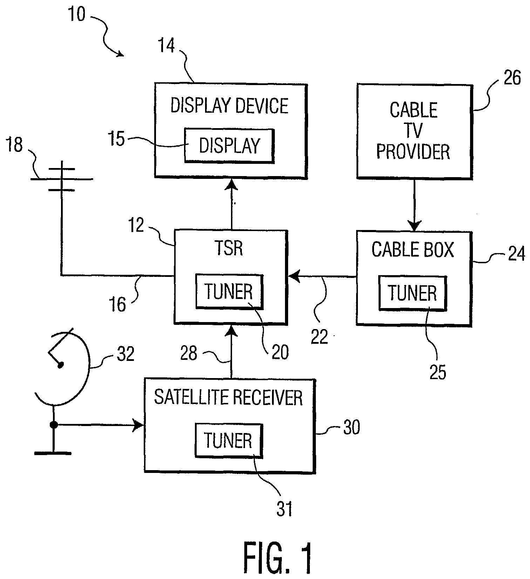

Referring now to Fig. 1, there is depicted a block diagram of an exemplary television system, generally designated 10, in which the principles of the subject invention may be incorporated. The television system 10 includes a television signal receiver (TSR) 12 that is adapted, configured and/or operative to receive and process television signals from a variety of television signal sources. The television signal receiver 12 is connected to a display device 14, as represented by the arrow between the television signal receiver 12 and the display device 14, that has a display, screen or the like 15. The display device 14 may be of any type that is adapted, configured and/or operative to receive video signals, on-screen display signals, and/or other displayable signals from the television signal receiver 12 and provide those signals to the display 15 in order to be shown on the display 15. It should be appreciated that while the display 14 is shown as separate from the television signal receiver 12, the display 14 may be integral with the television signal receiver 12, depending on the specific form of television signal receiver.

The television signal receiver 12 includes an over-the-air television signal input 16 that is connectable (and is shown connected) to an antenna 18. The antenna 18 may of any form and receive either analog or digital television signals. In an analog form, the antenna 18 may receiver either or both VHF and UHF television signals. In the case of over-the-air television signals, the received television signals typically comprise a plurality of television channels. Each television channel carries its video and audio components or programming. A television channel may additionally carry an auxiliary data component that includes one or more various types of auxiliary data. In order to separate the various television channels from the received over-the-air television signal, the television signal receiver 12 includes a tuner 20. The tuner 20 is operative, configured and/or adapted to tune to a particular over-the-air television channel (i.e. a "tuner channel"). The tuner 20 may thus be an analog tuner, a digital tuner, or incorporate both analog and digital tuning capabilities.

In addition to the over-the-air television signal input 16, the television signal receiver 12 includes a cable television (CATV) signal input 22. The CATV input 22 is shown connected to a cable box 24 that is connected to a CATV provider or headend 26. The cable box 24 is operative, configured and/or adapted to receive cable television signals that may be either analog or digital television signals, or which may be a combination of analog and digital television signals. In the case of cable television signals, the received television signals typically comprise a plurality of television channels. Each television channel carries its video and audio components or programming. A television channel may additionally carry an auxiliary data component that includes one or more various types of auxiliary data. In order to separate the various television channels from the received cable television signal, the cable box 24 includes a tuner 25. The tuner 25 is operative, configured and/or adapted to tune to a particular cable television channel (i.e. a "cable channel"). The tuner 25 may thus be an analog tuner, a digital tuner, or incorporate both analog and digital tuning capabilities.

In addition to the over-the-air television signal input 16 and the CATV input 22, the television signal receiver 12 includes a satellite television signal input 28. The satellite input 28 is shown connected to a satellite receiver or box 30 that is connected to a satellite receiving antenna (i.e. dish) 32. The satellite receiver 30 is operative, configured and/or adapted to receive satellite television signals that may be either analog or digital television signals, or which may be a combination of analog and digital television signals, but is typically digital television signals. In the case of satellite television signals, the received television signals typically comprise a plurality of television channels. Each television channel carries its video and audio components or programming. A television channel may additionally carry an auxiliary data component that includes one or more various types of auxiliary data. In order to separate the various television channels from the received satellite television signal(s), the satellite receiver 30 includes a tuner 31. The tuner 31 is operative, configured and/or adapted to tune to a particular cable television channel (i.e. a "cable channel"). The tuner 31 may thus be an analog tuner, a digital tuner, or incorporate both analog and digital tuning capabilities.

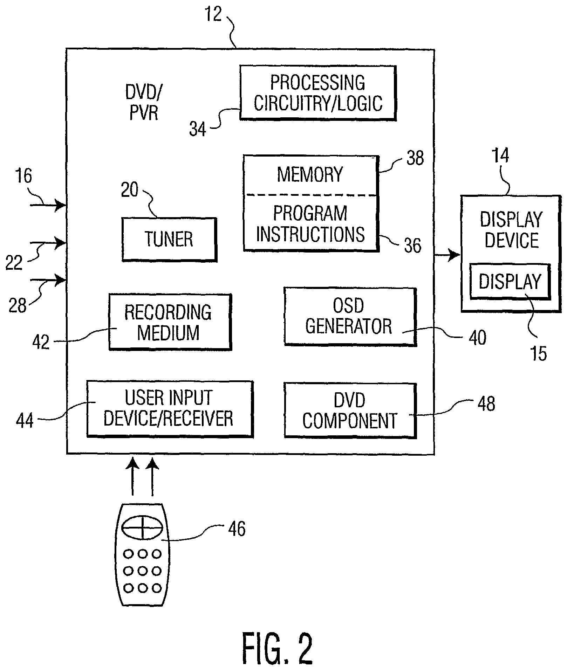

It should be appreciated that the television signal receiver 12, the cable box 24, and the satellite receiver 30 are simplistically shown in Fig. 1. As such, each include other or additional components (not shown) such as are known in art in order to operate in a manner or manners typical for each device. With respect to the television signal receiver 12, various other components are shown in Fig. 2 and described in connection therewith.

The television signal receiver 12 is thus operative to tune to a particular off-air television channel. The television signal receiver 12 may also incorporate a "cable tv" tuner and thus combine or be able to tune to cable and off-air television channels via a single input. In this case, the antenna input 16 and the CATV input 22 may be combined.

In the case of the cable channels from the cable box 24 and the satellite channels (from the satellite receiver 30), the television signal receiver 12 provides a pass-through of those television channels. Particularly, a television channel tuned by the satellite receiver 30 (i.e. a "satellite channel" on a "satellite tuner") and a television channel tuned by the cable box 24 (i.e. a "cable channel" on a "cable tuner") is provided to the display 14 or any other television signal receiving device/component connected thereto (all collectively, "auxiliary channels" on an "auxiliary tuner"). The television signal receiver 12, of course, may utilize the received satellite channel or cable channel for its own purposes, depending on the particular embodiment of television signal receiver.

In this respect, the television signal receiver 12 represents and thus may constitute many different types of devices that receive and process television signals, such as television signal recorders (e.g. PVR, hard disk recorders, and the like), a television, set-top box, combination devices such as DVD/PVRs, and/or the like. The television signal receiver 12 may also be a satellite receiver that accepts over-the-air television signals, cable television signals, or both over-the-air and cable television signals, in addition to satellite television signals. Following this manner, the television signal receiver 12 may also be a cable box.

With respect to Fig. 1, while the television signal receiver 12 is shown with three television signal inputs (i.e. the over-the-air input 16, the CATV input 22, and the satellite input 28), it should be appreciated that the television signal receiver 22 may have more or less television signal inputs. However, in the case of less television signal inputs, there are no less than two. The television signal receiver may also have other or auxiliary inputs for receiving television signals from other sources. Such other or auxiliary television signal inputs may be known as AV-1, AV-2, S-video, Aux-1, and/or the like.

In all cases, and as described further below, the television signal receiver 12 is operative, configured and/or adapted to provide visual feedback to a user of whether the television signal receiver is performing a tuner channel change, a satellite channel change, or a cable channel change in response to a direct entry channel change request. Particularly, in response to the receipt of a first or initial digit for a television channel change, the television signal receiver 12 generates, or causes to be generated, an on-screen display of visual feedback, and provides the generated on-screen display to the display device 14. In one form, the visual feedback may be provided as an information banner. The information banner shows the channel number being entered (or entered), the tuning device to which the channel change request is being processed (i.e. which tuning device is tuning the channel number), and the ability to change the tuning device (e.g. from satellite to cable). While the television channel change is typically initiated by a user via an entry device such as a remote, a television channel change may be initiated by the television signal receiver or other component. Preferably, but not necessarily, the television signal receiver 12 defaults to the tuning device of the last tuned channel.

Referring now to Fig. 2, there is depicted a block diagram of an exemplary television signal receiver 12 in accordance with the principles of the subject invention. The television signal receiver 12 is embodied in Fig. 2 as a combination DVD/PVR. It should be appreciated that other types of television signal receivers may utilize the principles set forth herein, particularly with respect to the DVD/PVR 12 of Fig. 2.

The DVD/PVR 12 further includes signal processing circuitry/logic, processor, processing means, or the like 34. While the processing circuitry/logic is depicted as a single block, it should be appreciated that the processing circuitry/logic 30 may be embodied as one or more integrated circuits (ICs) with or without additional circuitry/logic. The processing circuitry/logic 34 is adapted, configured and/or operative to process the digital and/or analog television signals in order to obtain the audio information for sound reproduction, the video information for display, and obtain PSIP/auxiliary information. The signal processing circuitry/logic 34 is further adapted, configured and/or operative to perform other DVD/PVR signal processing tasks such as are typical and/or known in the art and to generally control, regulate and/or operate the components of the DVD/PVR 12. To this end, the signal processing circuitry/logic 34 is adapted, configured and/or operative to utilize programming (software) or program instructions 36 that are stored in a memory 38. The program instructions 36 provide for the functionality as described herein.

Moreover, the DVD/PVR 12 includes an on-screen display (OSD) generator 40 that is adapted, configured and/or operative to generate, under control of the processing circuitry/logic 34 and/or the program instructions 36 stored in the memory 38, on-screen display signals the allow the display device 14 to depict or show various text messages, menus, lists, graphics, representations, and/or the like in accordance with the principles of the subject invention, particularly the visual feedback (e.g. information banner) for channel change. Such on-screen displays may change in real-time or be static as the case requires in accordance with the subject principles.

Still further, the DVD/PVR 12 includes a user input device and/or receiver 44. The user input device/receiver 44 is adapted, configured and/or operable to accept or receive input from a user regarding direct entry channel change (i.e. digit by digit), a selection, choice, toggle button, aspect, feature and/or preference with regard to a feature, function and/or setting of the DVD/PVR 12. In one form, the user input device/receiver 44 may be a remote control 46 and associated remote control receiver such as an IR transmitter/receiver. In another form, the user input device/receiver 44 may be a panel of buttons or the like that allow user input. User input of a channel change in the form of direct digit entry is accepted and acted on by the DVD/PVR 12. The user input device/receiver 44 also receives commands for other various purposes such as in response to function and/or feature choices provided as on-screen menu choices and/or options. This includes changing a current tuner for channel tuning.

The DVD/PVR 12 may also include a recording medium 42 such as a hard drive, tape, other digital storage means and/or the like for the PVR functionality thereof. Moreover, the DVD/PVR 12 includes DVD components 48 such as are known in the art for accepting and playing a DVD. It should be appreciated that the DVD/PVR 12 also includes other components not particularly shown and/or described herein that are typical of DVD/PVRs. Moreover, the DVD/PVR 12 is capable of many features and/or functions typical of current DVD/PVRs.

The DVD/PVR 12 stores the program instructions or software 36 in the memory 38 which are executable particularly by the processing circuitry/logic 34 but which may be executable by other components of the DVD/PVR 12. The memory 32 may be any suitable type of memory or storage device such as RAM, ROM, or the like. The program instructions provide for the operation of the DVD/PVR such as is known in the art in addition to the operation thereof in accordance with the principles of the subject invention. The program instructions provide for the operation of the processing circuitry and/or operation of the various components thereof through the processing circuitry. As such, the execution of the program instructions may be deemed operation/functioning of the DVD/PVR 12 in addition to the operation/functioning of the television signal processing circuitry/logic 34.

In particular, the DVD/PVR 12 receives a request for a television channel change typically, but not necessarily, via the remote 46. The channel change request is typically accomplished by the pressing of the digit keys of the remote. Upon receipt of the first digit of the intended channel, the DVD/PVR causes the OSD generator 40 to provide visual feedback to the user. In one form, the OSD generator 46 provides an information banner to the display device 14 for showing on the display 15.

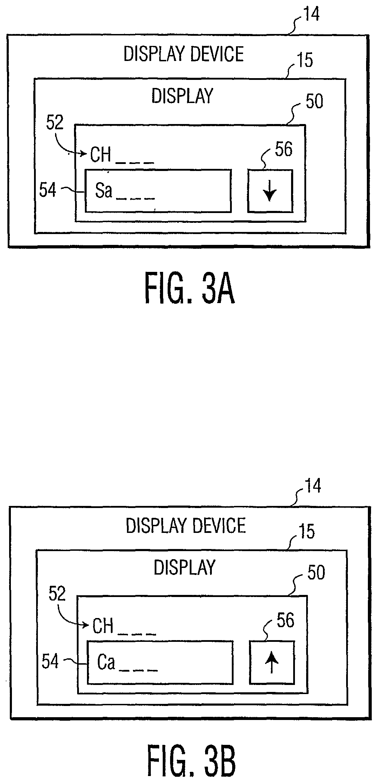

Referring to Fig. 3A, there is depicted an exemplary information banner 50 provided to the display device 14 as the visual feedback for a channel change request. The information banner 50 includes a tuner channel section 52 that is operative to show the television channel number (represented by the three underlines) with respect to the tuner of the DVD/PVR 12. As the digits entered by the user are provided in the blanks of the tuner channel section 52, the user is made aware that the channel number being entered is being (or to be) tuned by the DVD/PVR tuner ("tuner channel"), and not the satellite, cable or other component tuners (collectively, "auxiliary channel", separately, "satellite channel", "cable channel", or the like).

The information banner 50 also includes an auxiliary tuning device section 54 that depicts one (as shown) or more auxiliary tuning devices that are available (connected to the DVD/PVR 12) for obtaining television channels from the other respective sources. In the example of Fig. 3A, the auxiliary tuning device section 54 shows a satellite tuner of a satellite receiver. The user may use the remote to select the auxiliary tuning device section 54 in order to allow a channel change to effect tuning from that device. Again, the three underlines will be replaced with the user entered television channel number (digits). Additionally, an auxiliary tuning device toggle or button 56 is provided if there are additional tuning components available. In this example, there is an additional tuning component available (another set of television channels from another source). Selection of this button allows the user to change the tuning component in the auxiliary tuning device section 54.

In Fig. 3B, the information banner 50 is shown after the user has switched from the satellite tuner ("Sa") to the cable tuner ("Ca") via the tuning device change button or toggle 56. The cable box (Ca) is now shown in the auxiliary tuning device section 54. Entry of a television channel number in this section thus effects tuning by the cable box. The auxiliary tuning device button 56 changes to depict previous device availability.

After entry of a television channel number, the information banner 50 disappears, and the requested television channel appears. According to an aspect of the subject invention, upon initial entry of a first digit of a channel number for a channel change, the DVD/PVR may always default to the tuner channels. However, according to another aspect of the subject invention, the DVD/PVR may, rather that always defaulting to the tuner of the DVD/PVR, default to tuning of whatever tuner was last used (i.e. the tuner of the last, or current before a channel change, television channel being viewed). Thus, if the user was watching a satellite channel, the entered television channel will show up in the auxiliary tuning device section 54 with the "Sa" label signifying the satellite tuner, and the satellite tuner will be used for tuning. Such default may be selectable by the usher.

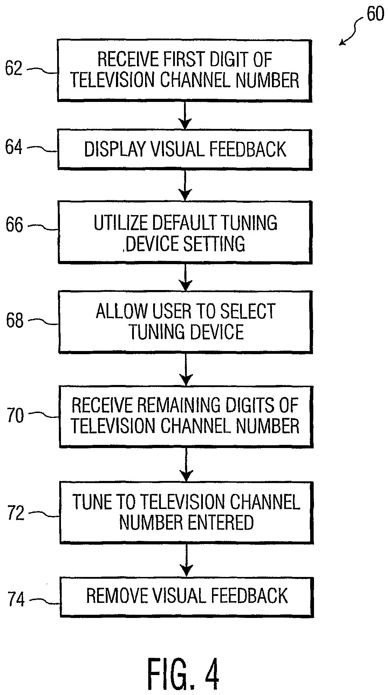

Referring to Fig. 4, there is depicted a flowchart, generally designated 60, of an exemplary manner of operation of a television signal receiver 12 no matter what form in accordance with the present principles. In block 62, the television signal receiver 12 receives a first digit of a television channel number, This constitutes a television channel change. In block 64, the television signal receiver provides visual feedback regarding the television channel change, such as an information banner. In block 66, the television signal receiver utilizes the default tuning device setting to depict the entry of the first digit into a particular tuning channel component section of the visual feedback. In block 68, the user is allowed to select the tuning device if the default tuning devise is not what is desired.

Thereafter, in block 70, the television signal receiver 12 receives the remaining television channel numbers/digits. In block 72, the television signal receiver causes the selected tuning device to tune to the particular channel. The visual feedback is then removed as per block 74. It should be appreciated that all of the above steps may not be necessary to provide the subject visual feedback. Moreover, not all of the steps are necessarily accomplished in the order presented. Variations are thus contemplated.

It should be appreciated that a method in accordance with another aspect of the principles of the subject invention may contain more or less steps than described in conjunction with the flowchart 60 of Fig. 4 and/or different or modified steps than that described. As well, other manners of providing system state information in a user-friendly manner are contemplated and expected.

## Claims

1. A method (60) of processing a television channel change request, in a television signal receiver (12), comprising:
receiving a first digit of a television channel (62) of a user request to change a television channel; and
providing, in response to receipt of said first digit, an on-screen display showing the first entered television channel digit,
in a tuner channel section (52) of the on-screen display if the first digit pertains to a tuner (20) of a television signal receiver (12)
or
in an auxiliary tuning device section (54) of the on-screen display if the first digit pertains to a tuner (25, 31) of an auxiliary tuning device (24, 30) connected to the television signal receiver (12)
for selecting (68) the tuning device section (52, 54) by the user; and
wherein providing the on-screen display comprises showing a toggle button (56) for changing the auxiliary tuning device (25, 31) shown in the auxiliary tuning device section (54) if there are additional auxiliary tuning devices (25, 31) by the user.

2. The method (60) of claim 1, further comprising:
defaulting (66) to one of the tuner of the television signal receiver (12) and the tuner (25,31) of an auxiliary tuning device (24, 30) as the tuning device of which a last television channel was tuned as the tuning device to which the first entered television channel digit pertains.

3. A television signal receiver (12) comprising:
means for receiving a first digit of a television channel (34, 44) of a user request to change a television channel; and
means for providing, in response to receipt of said first digit, an on-screen display (34, 40) showing the first entered television channel digit
in a tuner channel section (52) of the on-screen display if the first digit pertains to a tuner (20) of a television signal receiver (12)
or
in an auxiliary tuning device sections (54) of the on-screen display if the first digit pertains to a tuner (25, 31) of an auxiliary tuning device (24, 30) connected to the television signal receiver (12)
for selecting (68) the tuning device section (52, 54) by the user
wherein the means for providing the on-screen display comprises showing a toggle (56) for changing the auxiliary tuning device (25, 31) shown in the auxiliary tuning device section (54) if there are additional auxiliary tuning devices (25, 31) by the user.

4. The television signal receiver (12) of claim 3, further comprising:
means for defaulting (34) to one of the tuner (20) of the television signal receiver (12) and the tuner (25, 31) of the auxiliary tuning device (24, 30) as the tuning device of which a last television channel was tuned as the tuning device to which the first entered television channel digit pertains.

## Patentansprüche

1. Verfahren (60) zum Verarbeiten einer Aufforderung zum Wechseln eines Fernsehkanals in einem Fernsehempfänger (12), umfassend:
Empfangen einer ersten Ziffer eines Fernsehkanals (62) nach einer Aufforderung durch einen Benutzer, einen Fernsehkanal zu wechseln, und
in Reaktion auf den Empfang der ersten Ziffer Bereitstellen einer Bildschirmanzeige, die die erste eingegebene Ziffer des Fernsehkanals anzeigt,
und zwar in einem Tunerkanalabschnitt (52) der Bildschirmanzeige, wenn die erste Ziffer zu einem Tuner (20) eines Fernsehempfängers (12) gehört,
oder
in einem Tunerhilfsvorrichtungsabschnitt (54) der Bildschirmanzeige, wenn die erste Ziffer zu einem Tuner (25, 31) einer Tunerhilfsvorrichtung (24, 30) gehört, die mit dem Fernsehempfänger (12) verbunden ist,
um die Auswahl (68) des Tunervorrichtungsabschnitts (52, 54) durch den Benutzer durchzuführen, und
wobei das Bereitstellen der Bildschirmanzeige das Anzeigen einer Umschalttaste (56) zum Wechseln der in dem Tunerhilfsvorrichtungsabschnitt (54) angezeigten Tunerhilfsvorrichtung (25, 31) durch den Benutzer umfasst, falls zusätzliche Tunerhilfsvorrichtungen (25, 31) vorhanden sind.

2. Verfahren (60) nach Anspruch 1, ferner umfassend:
Voreinstellen (66) auf den Tuner des Fernsehempfängers (12) oder des Tuners (25, 31) einer Tunerhilfsvorrichtung (24, 30) als die Tunervorrichtung, bei der ein letzter Fernsehkanal als die Tunervorrichtung eingestellt wurde, zu der die erste eingegebene Ziffer des Fernsehkanals gehört.

3. Fernsehempfänger (12), umfassend:
ein Mittel zum Empfangen einer ersten Ziffer eines Fernsehkanals (34, 44) nach einer Aufforderung durch den Benutzer, einen Fernsehkanal zu wechseln, und
ein Mittel zum Bereitstellen einer Bildschirmanzeige (34, 40), die die erste eingegebene Ziffer des Fernsehkanals anzeigt, in Reaktion auf den Empfang der ersten Ziffer,
und zwar in einem Tunerkanalabschnitt (52) der Bildschirmanzeige, wenn die erste Ziffer zu einem Tuner (20) eines Fernsehempfängers (12) gehört,
oder
in einem Tunerhilfsvorrichtungsabschnitt (54) der Bildschirmanzeige, wenn die erste Ziffer zu einem Tuner (25, 31) einer Tunerhilfsvorrichtung (24, 30) gehört, die mit dem Fernsehempfänger (12) verbunden ist,
um die Auswahl (68) des Tunervorrichtungsabschnitts (52, 54) durch den Benutzer durchzuführen,
wobei das Mittel zum Bereitstellen der Bildschirmanzeige das Anzeigen einer Umschalttaste (56) zum Wechseln der in dem Tunerhilfsvorrichtungsabschnitt (54) angezeigten Tunerhilfsvorrichtung (25, 31) durch den Benutzer umfasst, falls zusätzliche Tunerhilfsvorrichtungen (25, 31) vorhanden sind.

4. Fernsehempfänger (12) nach Anspruch 3, ferner umfassend:
ein Mittel zum Voreinstellen (34) auf den Tuner (20) des Fernsehempfängers (12) oder des Tuners (25, 31) der Tunerhilfsvorrichtung (24, 30) als die Tunervorrichtung, bei der ein letzter Fernsehkanal als die Tunervorrichtung eingestellt wurde, zu der die erste eingegebene Ziffer des Fernsehkanals gehört.

## Revendications

1. Procédé (60) de traitement d'une demande de changement de canal de télévision, dans un récepteur de signaux de télévision (12), comprenant :
la réception d'un premier chiffre d'un canal de télévision (62) d'une demande de changement de canal de télévision par un utilisateur ; et
la fourniture, en réponse à la réception dudit premier chiffre, d'un affichage à l'écran affichant le premier chiffre de canal de télévision entré, dans une section de canal de syntoniseur (52) de l'affichage à l'écran si le premier chiffre se rapporte à un syntoniseur (20) d'un récepteur de signaux de télévision (12)
ou
dans une section de dispositif de syntonisation auxiliaire (54) de l'affichage à l'écran si le premier chiffre se rapporte à un syntoniseur (25, 31) d'un dispositif de syntonisation auxiliaire (24, 30) connecté au récepteur de signaux de télévision (12) pour la sélection (68) de la section de dispositif de syntonisation (52, 54) par l'utilisateur ; et
dans laquelle la fourniture de l'affichage à l'écran comprend l'affichage d'un bouton à bascule (56) pour le changement du dispositif de syntonisation auxiliaire (25, 31) affiché dans la section de dispositif de syntonisation auxiliaire (54) si des dispositifs de syntonisation auxiliaires supplémentaires (25, 31) sont présents par l'utilisateur.

2. Procédé (60) selon la revendication 1, comprenant en outre :
la sélection par défaut (66) de l'un du syntoniseur du récepteur de signaux de télévision (12) et du syntoniseur (25, 31) d'un dispositif de syntonisation auxiliaire (24, 30) comme dispositif de syntonisation dont un dernier canal de télévision a été syntonisé comme le dispositif de syntonisation auquel le premier chiffre de canal de télévision entré se rapporte.

3. Récepteur de signaux de télévision (12), comprenant :
un moyen pour recevoir un premier chiffre d'un canal de télévision (34, 44) d'une demande de changement de canal de télévision par un utilisateur ; et
un moyen pour fournir, en réponse à la réception dudit premier chiffre,
un affichage à l'écran (34, 40) affichant le premier chiffre de canal de télévision entré dans une section de canal de syntoniseur (52) de l'affichage à l'écran si le premier chiffre se rapporte à un syntoniseur (20) d'un récepteur de signaux de télévision (12)
ou
dans une section de dispositif de syntonisation auxiliaire (54) de l'affichage à l'écran si le premier chiffre se rapporte à un syntoniseur (25, 31) d'un dispositif de syntonisation auxiliaire (24, 30) connecté au récepteur de signaux de télévision (12)
pour la sélection (68) de la section de dispositif de syntonisation (52, 54) par l'utilisateur,
dans lequel le moyen pour fournir l'affichage à l'écran comprend l'affichage d'un bouton à bascule (56) pour le changement du dispositif de syntonisation auxiliaire (25, 31) affiché dans la section de dispositif de syntonisation auxiliaire (64) si des dispositifs de syntonisation auxiliaires supplémentaires (25, 31) sont présents par l'utilisateur.

4. Récepteur de signaux de télévision (12) selon la revendication 3, comprenant en outre :
un moyen pour sélectionner par défaut (34) l'un du syntoniseur (20) du récepteur de signaux de télévision (12) et du syntoniseur (25, 31) du dispositif de syntonisation auxiliaire (24, 30) comme dispositif de syntonisation dont un dernier canal de télévision a été syntonisé comme le dispositif de syntonisation auquel le premier chiffre de canal de télévision entré se rapporte.
